# EUROPEAN PATENT APPLICATION

(11) **EP 3 670 702 A1**
(43) Date of publication of application: **24.06.2020**
(21) Application number: 19151086.6
(22) Date of filing: 10.01.2019
(51) Int. Cl.: C25B 1/04, C25B 11/04, B01J 23/26, B01J 23/34, B01J 23/745, B01J 35/00

(54) **ELECTRODE MATERIAL**

(30) Priority: 21.12.2018 US 201862783593 P
(71) Applicant: INL - International Iberian Nanotechnology Laboratory, 4715-330 Braga (PT); FSU Research Foundation, Inc., Tallahassee, FL 32310 (US)
(72) Inventor: Xu, Junyuan, 4715 Braga (PT); Kolenko, Yury, 4715 Braga (PT); Mann, Dallas K., Tallahassee, FL 32310 (US); Shatruk, Michael, Tallahassee, FL 32310 (US)
(74) Representative: AWA Sweden AB

(57) **Abstract**

The present invention relates to an electrode material for oxygen evolution reaction. The electrode material comprises crystal structures of AlM₂B₂, wherein M is selected from Fe, Mn, and Cr. The present invention further relates to an electrode for oxygen evolution reaction and a system for water electrolysis.

## Description

### Technical field

The present invention relates to an electrode material suitable for oxygen evolution reaction. The present invention further relates to an electrode comprising an electrode material and a system for water electrolysis.

### Technical background

Fast depletion of fossil fuels drives extensive research efforts aimed at the development of renewable energy sources. Solar-powered fuel cells are one of the desired clean-energy technologies, which rely on the utilization of sun, wind and water as renewable energy sources.

Water electrolysis has been proposed as the cleanest way to produce hydrogen, if the required electricity is derived from renewable energy sources. Water electrolysis can be divided into two half reactions, hydrogen evolution reaction (HER) and oxygen evolution reaction (OER). In practice, the overall voltage required for electrocatalytic water splitting is substantially larger than the minimum thermodynamic value of 1.23 V. The excess voltage, known as overpotential, is due to various kinetic factors involved in the HER and OER processes. There is a need in electrocatalysis to decrease the overpotential and provide more energy-efficient water splitting.

The global hydrogen production is only 4% from water electrolysis, primarily because the hydrogen produced by water electrolysis is not economically competitive with hydrogen produced by steam reforming of natural gas. Presently, the state of the art electrocatalysts for HER and OER are platinum (Pt) and noble metal oxides including ruthenium oxide (RuO₂) and iridium oxide (IrO₂). However, these catalysts, which are based on platinum group metals (PGMs), suffer from disadvantages including being expensive and limited in their reserves.

There is a need for materials for electrodes for water electrolysis which provide efficient electrolysis of water, are affordable, and/or are manufactured from abundant materials.

### Summary of the invention

An object of the present invention is to provide an efficient electrode material suitable for oxygen evolution reactions without at least one disadvantage of prior art. A further object is to provide for efficient oxygen evolution reactions.

According to a first aspect, there is provided an electrode material for oxygen evolution reaction. The electrode material comprises crystal structures of AlM₂B₂, wherein M is selected from Fe, Mn, and Cr. The electrode material may be a pre-catalyst material, i.e. a material convertible to an active catalyst material for OER. The electrode material provides for efficient provision of electrodes. M being selected from Iron (Fe), Manganese (Mn), and Chromium (Cr) provides for efficient OER using abundant material.

M may be Fe.

The electrode material may at least partially be in form of particles, having a dimension from 30 nm to 3 000 nm, preferably 100 nm to 500 nm. Such sizes of particles provide for a large surface-to-volume ratio and, thus, a large surface available for OER per amount of electrode material. Further, improved mass-transfer effects are provided. The particles may be nanoparticles. The particles may be formed by ball-milling.

The electrode material may consist of the particles. The particles may be compact or elongated nanoparticles. The compact nanoparticles may refer to nanoparticles wherein the extension in any one direction is not larger than three times the extension in any other direction. Such compact nanoparticles comprise, for example, spherical, and cubical nanoparticles, but also comprise nanoparticles having irregular shapes, disk shapes, and parallelepiped shapes.

The electrode material may further comprise crystal structures of [M₂B₂], and oxidised M. Such a material enables efficient electrocatalyst and OER.

The crystal structures of [M₂B₂], and the oxidised M may be formed from the AlM₂B₂. The crystal structures of [M₂B₂], and the oxidised M may be formed from the AlM₂B₂ by mechanisms including release or leaching of Al.

The oxidised M may be selected from the group consisting of M-oxide, M-oxyhydroxide, and M-hydroxide, or combinations thereof, preferably the oxidised M is M₃O₄, or M₂O₃, or MO₂. Further, the oxidised M may be in form of particles having a dimension from 2 nm to 20 nm, positioned on a surface of, within, or between crystals of [M₂B₂] and/or AlM₂B₂. Preferably, the particles of oxidised M are in form of nanoclusters. The particles of oxidised M may be *in-situ* generated nanoclusters.

For the electrode material comprising crystal structures of AlM₂B₂ and [M₂B₂], the AlM₂B₂ and the [M₂B₂] each may be characterised by being in form of a layered crystalline structure.

The crystal structure of AlFe₂B₂ may be characterised by bond lengths of 1.605 Å for B-B, 2.622 Å for Al-Fe, 2.430 Å for Al-B, and 2.048 Å and 2.199 Å for Fe-B. It shall be realised that the [M₂B₂] crystals, obtained from the AlFe₂B₂, as described herein, may have bond lengths which are different from the AlFe₂B₂ crystals. Doping may change the bond lengths.

According to a second aspect, there is provided an electrode for oxygen evolution reaction formed by a support structure and an electrode material according to the first aspect, wherein the electrode material is provided as a coating on the support structure. The support structure may provide, for example, provision of desired shape of the electrode, and, further, electrical conductivity.

The support structure may be composed of metal, preferably porous metal or a metal structure of grid-type. The support structure being porous or of grid-type provides for efficient provision of a porous electrode enabling efficient oxygen production. Further, the porous or of grid-type support structure provides for a large surface-to-volume ratio allowing a high ratio of electrode material to support structure, high electrical conductivity, and an efficient support for the coating material.

The support structure may be composed of porous Nickel or porous Cobalt.

The electrode material may be coated on the support structure by, for example, sputtering or electroplating. Further, the electrode material may be applied as a coating in form of an ink comprising Nafion. Nafion is a good proton conductor for proton exchange membrane (PEM) fuel cells and enables excellent thermal and mechanical stability.

The electrode material may have a density on the support structure in the range of 0.1-5 mg cm⁻², preferably 1.9 to 2.1 mg cm⁻², such as, for example, 2 mg cm⁻². This provides for an increased use of catalytic sites of the electrode material on the support structure.

The support structure may be composed of porous Nickel or porous Cobalt. The support structure may be a current collector. The support structure may be Nickel foam (Ni foam). The support structure may further comprise or be composed of Titanium as an alternative to Nickel or Cobalt.

The electrode for oxygen evolution reaction may comprise an electrode material comprising AlM₂B₂ in form of particles having a dimension from 100 nm to 500 nm, wherein M is Fe, Cr or Mn, provided as a coating preferably having a density of 0.1-5 mg cm⁻² on a support structure comprising porous metal, preferably Nickel or Cobalt. The electrode material of the electrode as provided may further comprise crystal structures of [M₂B₂] and M₃O₄; or crystal structures of [M₂B₂], and M₃O₄ may be formed before or during use of the electrode.

As an alternative to the support structure being composed of metal, it may be composed of, for example, carbon paper or carbon fabric. Carbon provides for an efficient electrode material which is made from abundant material. Such a support structure further is durable. The carbon is inert and provides for high resistance to corrosion and oxidation and provides for efficient electron transport. The support structure comprising carbon therefore enables high efficiency electrode materials suitable for both cathodes and anodes, and the catalysis of both HER and OER.

According to a third aspect, there is provided a system for water electrolysis comprising an anode and a cathode, wherein the anode is an electrode according to the second aspect. The system may be, for example, half cell, full cell, three electrodes, PEM - polymer electrolyte membrane, or bipolar membrane.

Further features of, and advantages with, the present invention will become apparent when studying the appended claims and the following description. The skilled person will realise that different features of the present invention may be combined to create embodiments other than those described in the following, without departing from the scope of the present invention. Features of one aspect may be relevant to anyone of the other aspects, references to these features are hereby made.

### Brief description of the drawings

Fig.1 is a schematic illustration of an electrode material according to an embodiment.
Fig. 2a-b shows HAADF-STEM images and the corresponding STEM-EDX elemental maps of AlFe₂B₂ particles before (a) and after (b) electrocatalytic activation in a 1 M KOH electrolyte solution according to an embodiment.
Figs. 3 and 4 are schematic illustrations of an electrode for oxygen evolution reaction according to an embodiment.
Fig. 5 is a schematic illustration of the crystal structure of AlFe₂B₂ according to an embodiment.
Figs.6-10 shows the performance of different OER electrocatalysts in a 1 M KOH electrolyte solution according to an embodiment.
Fig. 11 illustrates current density vs. applied potential curves obtained with an electrode according to an embodiment.
Fig.12a and 12b shows Fe-*L*_{2,3} edge (12a) and O-*K* edge (12b) EELS spectra of AlFe₂B₂ particles according to an embodiment, before and after electrocatalytic activation. The reference spectra of α-Fe₂O₃, Fe₃O₄, and FeO are shown for comparison.
Fig.13 shows HRTEM image of an activated electrode material according to an embodiment, and the corresponding ED and FT ring patterns, which are indexed with the unit cell parameters of Fe₃O₄.
Fig.14 shows the hypothesized mechanism for the in-situ formation of OER electrocatalysis from an AlFe₂B₂ scaffold according to an embodiment.
Fig. 15 shows a comparison of OER electrocatalytic activity and stability of previously reported boride- and phosphide-based systems, to the performance of the AlFe₂B₂-based electrode according to an embodiment.

### Detailed description of the invention

The present invention will now be described more fully hereinafter with reference to the accompanying drawings, in which preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Although individual features may be included in different embodiments, these may possibly be combined in other ways, and the inclusion in different embodiments does not imply that a combination of features is not feasible. In addition, singular references do not exclude a plurality. In the context of the present invention, the terms "a", "an" does not preclude a plurality.

It shall be realised that the electrode material as used herein may be defined as a pre-catalyst material in the sense that it is in a form where at least part of the AlM₂B₂ has been converted to [M₂B₂] and oxidised M that the electrode material catalyses OER. It has been unexpectedly realised that AlM₂B₂ may be converted to [M₂B₂] and oxidised M, for example, during use of the electrode material under electrolytic conditions, thus converting the AlM₂B₂ to a material active for OER. Material comprising crystal structures of AlM₂B₂, wherein M is selected from Fe, Mn, and Cr, is referred to as electrode material herein. Further, [M₂B₂] refers to M₂B₂ as part of structures composed of units of [M₂B₂], such as for example crystal structures of [M₂B₂] units.

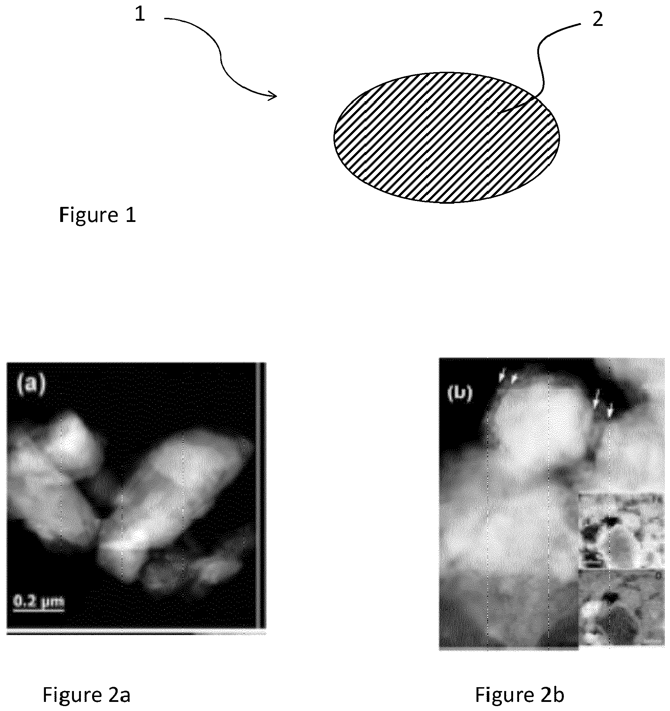

In figure 1 an electrode material 1 for oxygen evolution reaction is schematically illustrated. The electrode material 1 comprises crystal structures of AlM₂B₂ 2 wherein M is selected from Fe, Mn, and Cr.

The electrode material 1 for oxygen evolution reaction comprising crystal structures of AlM₂B₂, may be a pre-catalyst or a pre-electrode material for oxygen evolution reaction comprising crystal structures of AlM₂B₂, wherein M is selected from Fe, Mn, and Cr.

Although not illustrated in figure 1, the electrode material may at least partially be in form of particles, having a dimension from 30 nm to 3 000 nm, preferably 100 nm to 500 nm. Figure 2a illustrates a high-angle annular dark-field scanning transmission electron microscopy (HAADF-STEM) images of an example of such a particle consisting of AlFe₂B₂. Figure 2b illustrates a HAADF-STEM images of an example of the electrode material further comprising crystal structures of [M₂B₂], and oxidised M, in the illustrated example [Fe₂B₂] and Fe₃O₄. In the illustrated example, electrode material of figure 2a comprising AlFe₂B₂ has at least partly been converted to [Fe₂B₂] and Fe₃O₄, i.e. an active form for OER, in this example by electrocatalytic activation in a 1 M KOH electrolyte solution. In such an activation, Al are leaching out from the electrode material. Thereby, the electrode material may be considered to be converted from a pre-catalytic form to a catalytic form. It will be appreciated that similar conversion may be realised with electrode materials where M being eg. Cr or Mn. Such electrode material comprising AlM₂B₂, wherein M is selected from Fe, Mn, and Cr, provides for an efficient electrode material made from abundant materials.

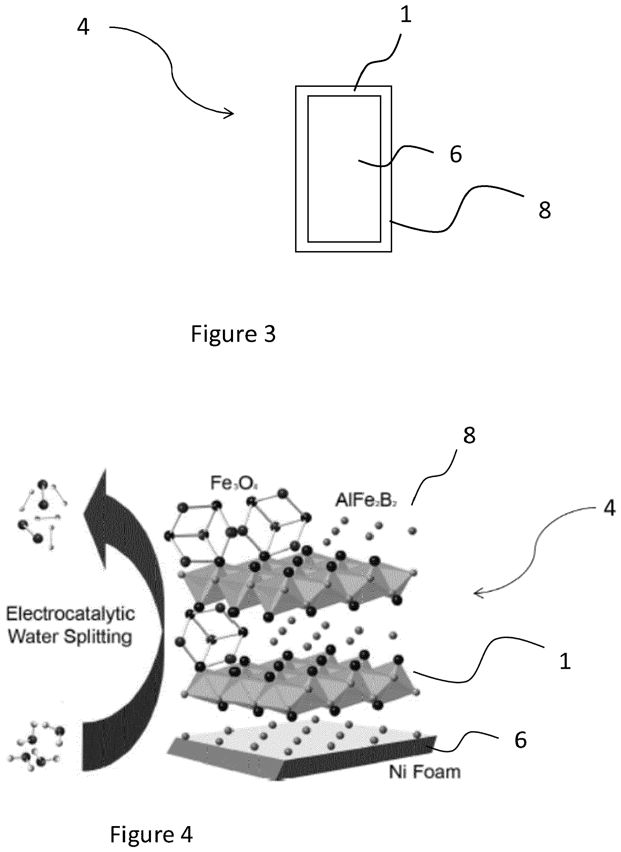

In figure 3 an electrode 4 for oxygen evolution reaction formed by a support structure 6 and the electrode material 1 according to the first aspect, wherein the electrode material 1 is provided as a coating 8 on the support structure 6 is schematically represented.

In figure 4 a portion of an electrode 4 for oxygen evolution reaction formed by a support structure 6 and the electrode material 1 according to the first aspect, wherein the electrode material 1 is provided as a coating 8 on the support structure 6 is schematically represented. Figure 4 schematically illustrates Fe₃O₄ on and between crystal layers and electrocatalyst of H₂O under formation of O₂.

The support structure 6 may be composed of metal, such as Ni or Co, preferably porous metal or a metal structure of grid-type. With such a support structure 6, the coating 8 of electrode material 1 may be present within pores (not illustrated) of the support structure 6. For example, the electrode material 1 may have a density on the support structure 6 in the range of 0.1-5 mg cm⁻², preferably 2 mg cm⁻².

The combination of the electrode material 1 with a support structure 6 provides for a supported electrode or catalyst structure with accessible catalytic sites and having high accessible surface area. For reasons including the above, there is provided with embodiments of the present invention an electrode material which may be coated on a support structure forming a electrode that may function as an efficient OER electrocatalyst.

The electrode for oxygen evolution reaction may comprise an electrode material comprising AlM₂B₂ in form of particles having a dimension from 100 nm to 500 nm, wherein M is Fe, Cr or Mn, provided as a coating preferably having a density of 0.1-5 mg cm⁻² on a support structure comprising porous metal, preferably Nickel or Cobalt. The electrode material of the electrode as provided may further comprise crystal structures of [M₂B₂] and M₃O₄; or crystal structures of [M₂B₂], and M₃O₄ may be formed before or during use of the electrode.

By way of examples, and not limitation, the following examples identify a variety of electrode materials pursuant to embodiments of the present invention. Although examples comprise M=Fe, Fe may be interchanged with Cr or Mn.

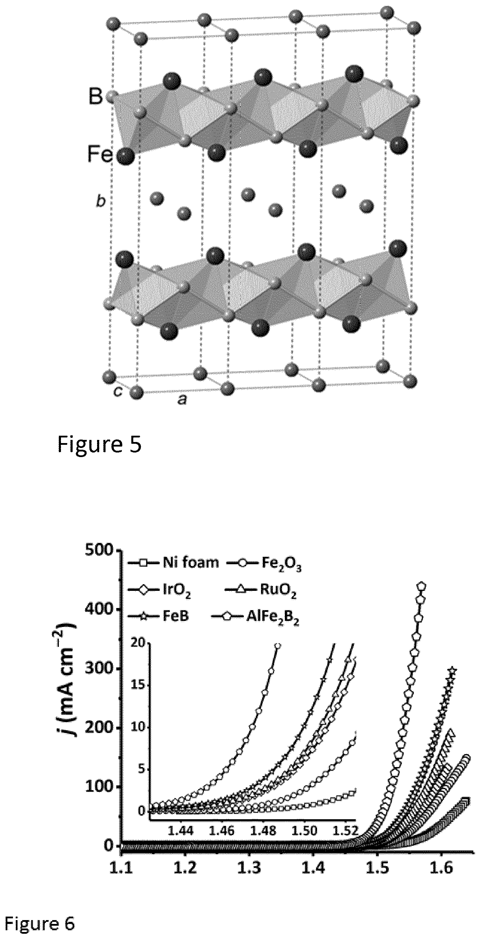

According to one example, the electrode material comprising AlFe₂B₂ has a layered crystal structure, which structure is illustrated in figure 5,wherein the Al atoms are sandwiched between the [Fe₂B₂] layers and may be etched or leached away to open up the catalytically active transition metal sites that subsequently catalyze OER. The underlying structure of AlFe₂B₂, thus, may act as a robust conductive structure for the catalytically active sites separated by the partially etched Al layers. Theoretical analysis shows that the bonding between the Al and [Fe₂B₂] layers in this structure is weaker than the Fe-B and B-B bonds within the [Fe₂B₂] layer.

According to embodiments, layers of [Fe₂B₂] function to serve as a precursor for Fe-based OER electrocatalyst. The electrode material comprising AlFe₂B₂ offers efficient OER with a low overpotential and remarkably high stability of the electrode material. The AlFe₂B₂ acts as a robust scaffold for *in situ* formation of catalytically active Fe₃O₄ nanoclusters on the surface of the [Fe₂B₂] layers. Catalytic performance, long-term stability and efficient synthesis suggest that this system may serve as an efficient and inexpensive OER catalyst, which may be made from abundant material.

### Preparation of electrode material:

According to one example, an electrode material for oxygen evolution reaction according to embodiments, was manufactured according to the description below. It will be evident that electrodes from thus prepared electrode material coated on a porous support material provide for the desired OER.

Manufacturing of electrode material was performed in an argon-filled dry box (content of O₂ < 0.5 ppm). Powders of aluminum (99.97%), iron (98%), crystalline boron (98%), and iron boride (FeB, 98%) were obtained from Alfa Aesar. The iron powder was additionally purified by heating in a flow of H₂ gas at 500 °C for 5 h. The other materials were used as received.

Starting materials were mixed in a AI:Fe:B = 3:2:2 ratio (a total weight of 0.35 g) and pressed into a pellet, which was arc-melted in an argon-filled glovebox. The pellet was remelted 4 times to achieve uniform melting. To maximize the sample's homogeneity, it was sealed in a silica tube under vacuum (∼10⁻⁵ torr) and annealed at 900 °C for 1 week.

Powder X-ray diffraction analysis (PXRD) revealed AlFe₂B₂ as the major phase with Al₁₃Fe₄ as minor byproduct. The byproduct was removed by HCI/water 1:1 vol/vol. It was observed that the electrode material also may be dissolved in dilute HCI, although slower than the impurity.

The, thus purified, electrode material was ball-milled at 1725 rpm for 1 h in an 8000M High-Energy Mixer/Mill (SPEX), using a stainless-steel ball-milling set. The milling was carried out under Ar to minimize surface oxidation. The PXRD of the ball-milled sample revealed broadening of diffraction peaks, in accord with the decreased particle size. No traces of impurity phases were observed, except for a minor peak of Al₂O₃ which would be dissolved for example by the basic conditions of electrochemical conditions.

Transmission electron microscopy (TEM) analysis (using JEM-ARM200F microscope with cold field-emission gun, probe and image aberration corrected, equipped with CENTURIO EDX detector and GIF Quantum) was used for particle analysis. TEM samples were prepared by crushing a sample of electrode material in an agate mortar in ethanol and depositing the obtained suspension on a Cu carbon holey grid. The TEM analysis showed that the particle sizes obtained from the ball-milling were in the range of approximately 30 to 500 nm. Larger and smaller particles of electrode material may be obtained by different conditions for ball-milling.

Electrode materials of AlCr₂B₂ and AlMn₂B₂ were also prepared:
AlCr₂B₂ was prepared by mixing the elements in a AI:Cr:B = 30:1:1 ratio (a total weight of 1.0 g) and placing them into an alumina crucible, which was sealed in an evacuated silica tube. The mixture was heated to 1000 °C at 300 °C/h, held at that temperature for 3 days, and cooled in 50 °C increments to room temperature. Once cooled, the product was treated with dilute HCI (1:1 vol/vol) for 10 min to eliminate the excess of Al. Prism-shaped crystals of AlCr₂B₂ could be selected from the product.
AlMn₂B₂ was synthesized by mixing elements in a AI:Mn:B = 1.5:2:2 ratio (a total weight of 0.35 g). The mixture was pressed into a pellet and arc-melted multiple times to ensure uniform melting. The sample was sealed in an evacuated silica tube and annealed at 800 °C for 2 weeks. After cooling down to room temperature, the sample was ground and subjected to PXRD, which revealed AlMn₂B₂ as the major phase and Al₁₀Mn₃ as a minor byproduct (<5%).

### Preparation of electrode:

The following is one example of preparing an electrode, according to embodiments, of the ball-milled electrode material. The ball-milled electrode material consisting of AlFe₂B₂ was converted into an electrode ink by ultrasonically dispersing 5 mg of the electrode material in 1000 µL of ethanol containing 50 µL of a Nafion solution (Sigma-Aldrich, 5 wt.%). To prepare an electrode for catalytic tests, 200 µL of the ink was loaded on a Ni foam (Heze Jiaotong, 110 pores per inch, 0.3 mm thick, cleaned by ultrasonication in 6 M HCI) with an exposed area of 1.0 cm², leading to a loading density of approximately 1.0 mg cm⁻², followed by drying under ambient conditions. The result was an example of an electrode for OER formed by a support structure comprising porous Nickel and an electrode material comprising AlFe₂B₂ provided as a coating on the support structure. The electrode material of the coating comprises particles resulting from the ball-milling.

In alternative experiments, the support structure may be for example in form of a grid. According to other examples, alternative metals, M, were used for the electrode material preparation, for example Cr.

### Electrochemical measurements:

The electrode prepared according to the above example, was used and verified according to the following one example. Electrochemical measurements were conducted at 25°C, using a Biologic VMP-3 potentiostat/galvanostat. The OER performance of various electrodes, including the one prepared according to the above, were evaluated in a three-electrode system using 1.0 M KOH electrolyte, in which the catalytic electrode, the saturated calomel electrode (SCE), and a Pt wire served as the working, reference, and counter electrodes, respectively. Prior to each measurement, the SCE electrode was calibrated in Ar/H₂-saturated 0.5 M H₂SO₄ solution, using a clean Pt wire as the working electrode. Unless stated otherwise, all potentials according to the present invention were converted to a reversible hydrogen electrode (RHE) reference scale according to the following equation: E_{RHE} = E_{SCE} + 0.059pH + 0.241. An *iR*-correction of 85% was applied in the polarization experiments to compensate for the voltage drop between the reference and working electrodes, which was evaluated by a single-point high-frequency impedance measurement. OER anodic polarization curves were recorded with a scan rate of 5 mV s⁻¹ in the range from 1.0 to 1.7 V *vs.* RHE. Impedance spectroscopy measurements were carried out at the overpotential of 0.26 V in the frequency range from 10⁵ to 10⁻² Hz with a 10 mV sinusoidal perturbation. The catalytic stability of the electrodes was evaluated as a function of time at a constant current density of 10 mA cm⁻².

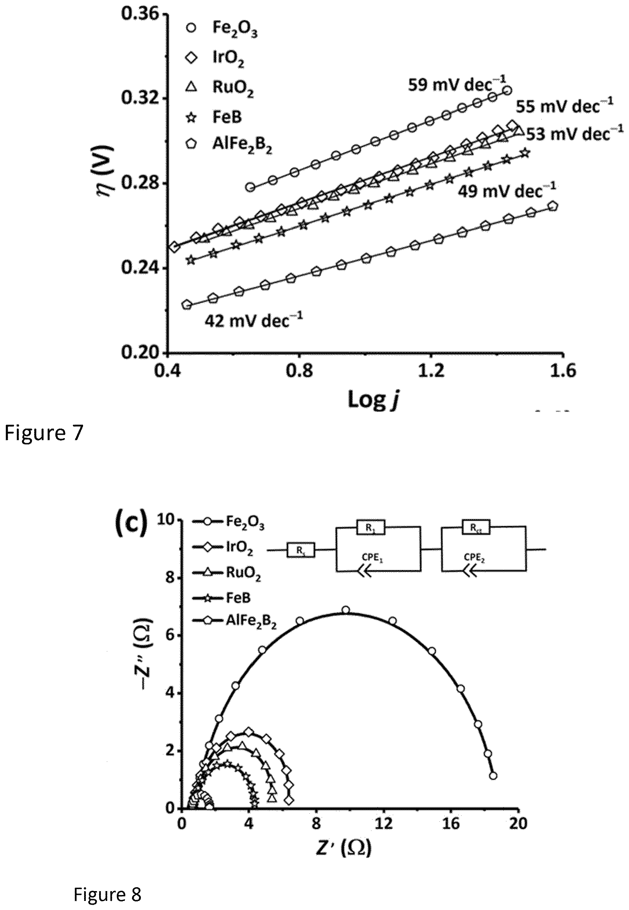

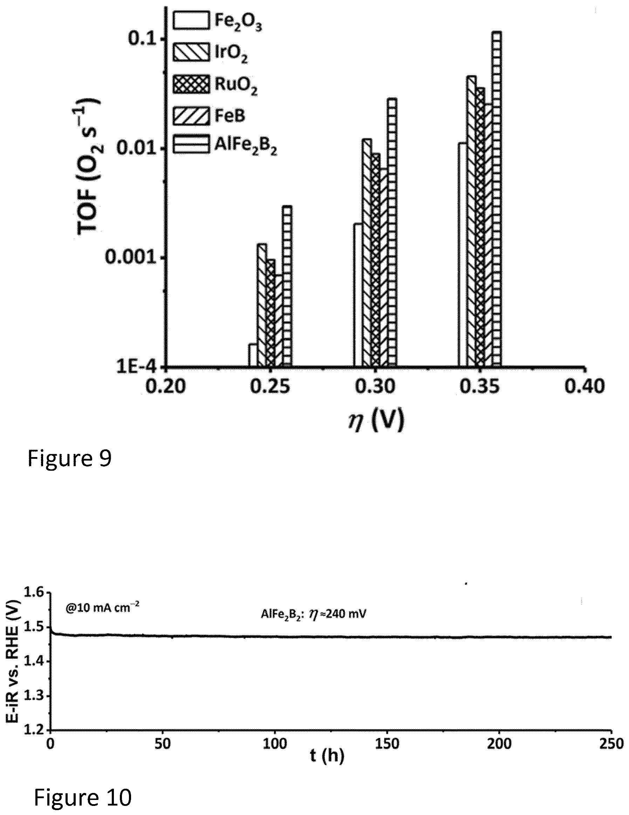

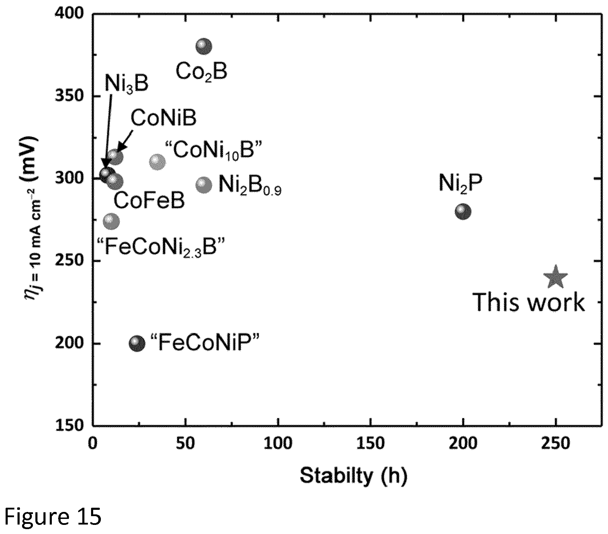

According to the example, current densities of 10, 100, and 300 mA cm⁻² were achieved at remarkably low overpotentials (*η*) of only 240, 290, and 320 mV, respectively. Figure 6 shows the evaluation of bare porous Ni, or Ni foam, and four other control electrocatalysts, FeB, Fe₃O₄, RuO₂, and IrO₂ under the same conditions, i.e. in a 1 M KOH electrolyte solution, as compared to the AlFe₂B₂ electrode material, wherein the current density vs. applied potential curves, with the inset showing an enlarged low-current part of the plot. Evidently, AlFe₂B₂ exhibits substantially lower overpotentials at all current densities, outperforming all the above mentioned reference systems. The kinetic behavior of the OER electrocatalysts was compared by means of Tafel and Nyquist plots, which, revealed that the electrode material comprising AlFe₂B₂ exhibits not only the lowest overpotential but also the smallest Tafel slope (Ts) in comparison to the reference electrocatalysts, as demonstrated in figure 7. The electrode material comprising AlFe₂B₂ shows a Ts value of 42 mV dec⁻¹, indicating the fastest OER rate in the 1 M KOH electrolyte. Further, figure 8 shows the Nyquist plot, obtained from the AC impedance measurements, demonstrating a significantly smaller charge-transfer resistance for AlFe₂B₂ as compared to the reference electrocatalysts. In one example the O₂ TOFs for the electrocatalysts were estimated as TOF (s⁻¹) = (*jA*)/(₄*Fn*), where *j* is the current density (A cm⁻²) at a given overpotential, A is the surface area of the electrode (1.0 cm²), *F* is the Faraday constant (96485 C mol⁻¹), and *n* is the amount of metal in the electrode (mol), determined as *n* = 1.0 mg cm⁻² x 1.0 cm² x 10⁻³/metal molar mass. It was assumed that all of the metal ions were catalytically active and thereby their TOFs were calculated. Notably, some metal sites were indeed inaccessible during OER, and thus the calculated TOFs represent the minimum possible values. In figure 9, the O₂ turnover frequencies (TOFs) at various overpotentials, such as 0.25, 0.30, and 0.35 V, are demonstrated. The electrode material comprising AlFe₂B₂ shows a TOF value of 0.12 s⁻¹ at the overpotential of 350 mV, at which the OER benchmarks IrO₂ and RuO₂ achieved substantially lower TOFs values of 0.05 s⁻¹ and 0.04 s⁻¹, respectively. Further, the stability of AlFe₂B₂ under the harsh OER conditions was evaluated, demonstrating excellent stability of the electrode material and electrodes according to embodiments. Figure 15 shows the chronopotentiometric plot of the performance of the electrode material comprising AlFe₂B₂ at the constant current density of 10 mA cm⁻², in the 1 M KOH electrolyte solution. At this particular constant current density, the electrode material comprising AlFe₂B₂ maintained an essentially constant overpotential of 240 mV for over a 10-day period. Hence, the electrochemical studies reveal the electrode material comprising AlFe₂B₂ as a suitable component in a highly active and inexpensive OER electrode with remarkable long-term stability.

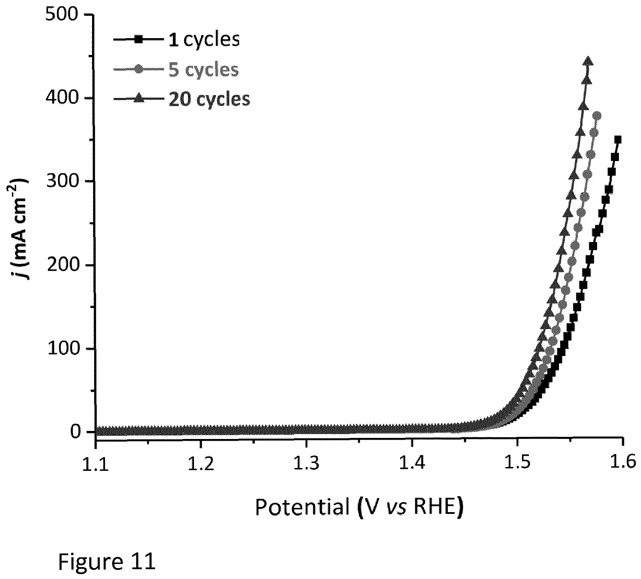

Upon examination of the catalyst's stability plot, with reference to figure 10, it was noticed an obvious decrease in the overpotential value in the very beginning of the reaction. By carrying out several electrocatalytic cycles and monitoring the current-potential curves, this feature was explored further. Figure 11 shows the current density vs. applied potential curves recorded over the AlFe₂B₂/porous-Ni electrode after OER catalytic cycles in a 1 M KOH electrolyte solution.

Elemental mapping of the ball-milled sample prior to catalysis showed presence of a thin oxide layer, which indicates minor oxidation and the presence Al₂O₃. Activated sample of the electrode material comprising AlFe₂B₂, obtained after 20 initial OER cycles, appeared much more heterogeneous. This sample clearly reveals the formation of core-shell particles. The development of the shell structure in the electrocatalytically activated sample is illustrated figure 2b, wherein the shell is indicated with white arrows. In figure 2b, energy-dispersive X-ray spectroscopy (EDX) elemental mapping similarly shows the presence of a thick layer of iron oxide on surface of AlFe₂B₂ particles. The EDX elemental mapping also shows that the AI:Fe ratio is drastically decreased, from 1:2 in the initial electrode material, or pre-catalyst material, to 1:6 in the activated one resulting from Al being partially leached out of layered AlFe₂B₂ structure under the basic conditions of electrocatalysis. This hypothesis is supported by theoretical analysis of the relative bond strengths presented in Table 1.

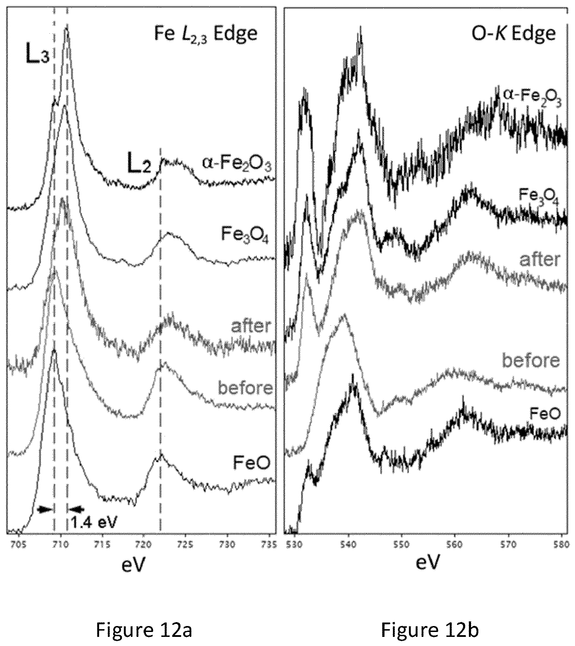

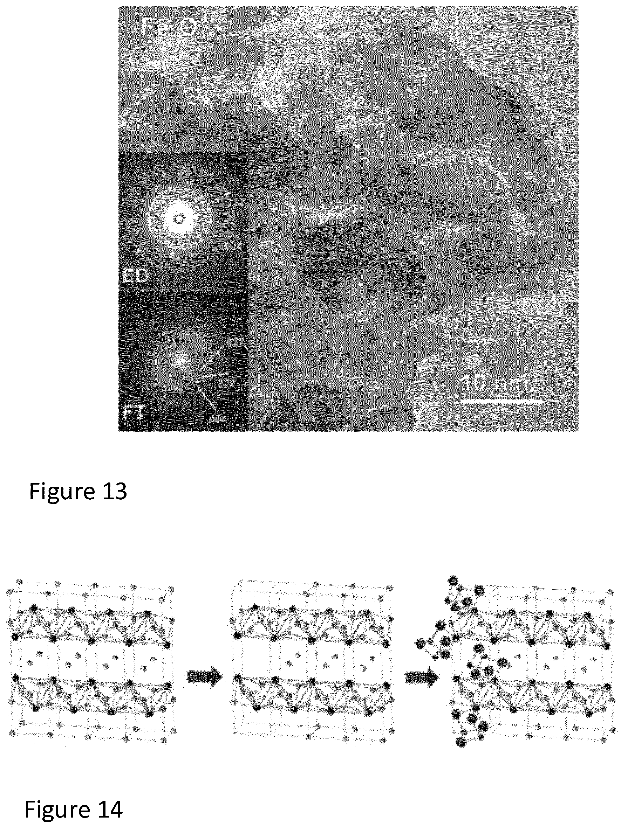

Electron energy loss spectroscopy (EELS) was used to probe the changes in the nature of the Fe sites during OER and to confirm the presence and localization of boron, which is difficult to detect by EDX spectroscopy. It may be observed that B is consistently present in the core-shell nanoparticles of the electrode material comprising AlFe₂B₂, along with Fe. Taking into account the EDX results and combining them with the EELS data, it may be concluded that these particles consist of AlFe₂B₂ core shelled with a layer of iron oxide. Analysis of the EELS data indicates that prior to catalytic testing the AlFe₂B₂ particles mainly contain Fe⁰ sites, with minor Fe³⁺ impurities. After activation, the thick oxide shell appears to be magnetite, Fe₃O₄. This phase may be distinguished from α-Fe₂O₃ and FeO by examining the iron L-edge and oxygen K-edge EELS fine structure observed in the energy regions around 705-725 eV and 530-570 eV, respectively, which is shown in figures 12a and 12b, respectively. In particular, the Fe *L*₃ peak of the sample is shifted to lower energies as compared to the peak of α-Fe₂O₃ while the Fe *L*₂ peak of the sample is shifted to higher energies as compared to the peak of FeO (figure 12b). The formation of Fe₃O₄ nanoparticles was also successfully confirmed by selected area electron diffraction (ED) patterns and high resolution TEM (HRTEM) imaging as illustrated in figure 13. The ED patterns were perfectly indexed using the unit cell parameters of Fe₃O₄, while the Fourier transform (FT) of the HRTEM image produced an identical ring diffraction pattern with the pronounced (111) spots characteristic of Fe₃O₄, which is due to a preferential orientation of the nanoparticles.

Based on results above, it may be concluded that the OER performance by AlFe₂B₂ is, at least in part, due to partial etching of Al from the structure, followed by the surface oxidation of the exposed [Fe₂B₂] layers, as reflected by the following idealized reaction sequence:

2AlFe₂B₂ + 2KOH + 6H₂O = 2 K[Al(OH)₄] + 4"FeB" + 3H₂,

12"FeB" + 6KOH + 17O₂ = 3K₂B₄O₇ + 4Fe₃O₄ + 3H₂O,

wherein "FeB" stands for the modified AlFe₂B₂ with partially etched Al layers. Thus, AlFe₂B₂ acts as a pre-catalyst, with the [Fe₂B₂] layers providing a robust support for *in situ* generated Fe₃O₄ nanoclusters. Hence, figure 14 illustrates that the partial etching of Al atoms in alkaline electrolyte exposes the [Fe₂B₂] layers, which are subsequently surface-oxidized to afford the electrocatalytically active ultra-small Fe₃O₄ nanoclusters. Figure 15 shows a comparison with other non-oxide OER catalysts (mainly borides and phosphides), which reveals a stable and efficient performance of the catalytic system based on the AlFe₂B₂ comprising electrode of the present invention.

In summary, the electrode material according to embodiments serves as an excellent OER pre-catalyst, maintaining high electrocatalytic activity for more than 10 days under alkali conditions. The present invention is not limited to exemplified electrode material comprising AlFe₂B₂, in fact other AlM₂B₂, which are isostructural to AlFe₂B₂, wherein M may be Cr or Mn, are also possible.

**Table 1. Distances and integral crystal orbital Hamilton population (-ICOHP) values calculated for the five shortest interatomic contacts in the structure of AlFe₂B₂.**

| Bond | Distance (Å) | -ICOHP (eV/bond) |
|---|---|---|
| B-B | 1.605 | 5.13 |
| Al-Fe | 2.622 | 1.02 |
| Al-B | 2.430 | 1.06 |
| Al-B | 2.048 | 2.75 |
| | 2.199 | 2.15 |

While the invention has been described in connection with what is presently considered to be the most practical embodiments, it is to be understood that the invention is not to be limited to the disclosed embodiments, but on the contrary, it is intended to cover various modifications and equivalents included within the spirit and scope of the appended claims.

## Claims

1. An electrode material for oxygen evolution reaction, the electrode material comprising crystal structures of AlM₂B₂, wherein M is selected from Fe, Mn, and Cr.

2. The electrode material according to claim 1, wherein the electrode material at least partially is in form of particles, having a dimension from 30 nm to 3 000 nm, preferably 100 nm to 500 nm.

3. The electrode material according to claim 2, wherein the electrode material further comprising crystal structures of [M₂B₂], and oxidised M.

4. The electrode material according to claim 3, wherein the oxidised M is selected from the group consisting of M-oxide, M-oxyhydroxide, and M-hydroxide, or combinations thereof, preferably the oxidised M is M₃O₄, M₂O₃, or MO₂.

5. The electrode material according to claim 3 or 4, wherein the oxidised M is in form of particles having a dimension from 2 nm to 20 nm, positioned on a surface of, within, or between crystals of [M₂B₂] or AlM₂B₂.

6. The electrode material according to any one of claims 3 to 5, wherein the AlM₂B₂ and the [M₂B₂] each are **characterised by** being in form of a layered crystalline structure.

7. The electrode material according to anyone of claims 1 to 6, wherein M is Fe.

8. An electrode for oxygen evolution reaction formed by a support structure and the electrode material according to anyone of claims 1-7, wherein the electrode material is provided as a coating on the support structure.

9. The electrode for oxygen evolution reaction according to claim 8, wherein the support structure is composed of metal, preferably porous metal or a metal structure of grid-type.

10. The electrode according to claim 9, wherein the support structure is composed of porous Nickel or porous Cobalt.

11. The electrode according to any one of claims 8 to 10, wherein the electrode material has a density on the support structure in the range of 0.1-5 mg cm⁻², preferably 2 mg cm⁻².

12. A system for water electrolysis comprising an anode and a cathode, wherein the anode is an electrode according to claims 8-11.
